(19) **Europäisches Patentamt**
**European Patent Office**
**Office européen des brevets**

(11) Veröffentlichungsnummer: **0 176 836**
**B1**

(12) **EUROPÄISCHE PATENTSCHRIFT**

(45) Veröffentlichungstag der Patentschrift: **06.02.91**

(51) Int. Cl.⁵: **C 01 B 25/023**

(21) Anmeldenummer: **85111592.3**

(22) Anmeldetag: **13.09.85**

(54) **Phlegmatisierter roter Phosphor.**

(30) Priorität: **03.10.84 DE 3436161**

(43) Veröffentlichungstag der Anmeldung:
**09.04.86 Patentblatt 86/15**

(45) Bekanntmachung des Hinweises auf die
Patenterteilung:
**06.02.91 Patentblatt 91/06**

(84) Benannte Vertragsstaaten:
**DE GB IT SE**

(56) Entgegenhaltungen:
**DE-B-2 249 638**
**DE-C-1 185 591**

(73) Patentinhaber: **HOECHST
AKTIENGESELLSCHAFT
Postfach 80 03 20
D-6230 Frankfurt am Main 80 (DE)**

(72) Erfinder: **Staendeke, Horst, Dr.
Alte Honrather Strasse 22
D-5204 Lohmar (DE)**
Erfinder: **Thümmler, Ursus, Dr.
Am Kapellenbusch 27
D-5042 Erftstadt (DE)**

Courier Press, Leamington Spa, England.

**Beschreibung**

Die vorliegende Erfindung betrifft phlegmatisierten, pulverförmigen roten Phosphor, welcher durch Behandlung von rotem Phosphor mit einem Phlegmatisierungsmittel aus einer bei Raumtemperatur und Normaldruck flüssigen, gegen roten Phosphor reaktionsträgen und einen geringen Dampfdruck aufweisenden organischen Verbindung hergestellt wird, sowie ein Verfahren zur Herstellung dieses phlegmatisierten, gut rieselfähigen roten Phosphors.

Roter Phosphor wird bekanntlich in der Pyrotechnik sowie zur Herstellung von Zündholzreibflächen benötigt und findet darüber hinaus Anwendung als Flammschutzmittel für Kunststoffe wie z. B. Polyamide oder Polyurethane. In jedem der vorgenannten Anwendungsgebiete ist die Verarbeitung des pulverförmigen roten Phosphors auf Grund seiner leichten Entzündbarkeit erschwert. Insbesondere die bei der Verarbeitung des roten Phosphors bisher unvermeidliche Staubbildung birgt große. Gefahren in sich, da bereits elektrostatische Entladungsfunken Staubexplosionen mit hoher Fortpflanzungsgeschwindigkeit auslösen können. Diese Gefahr ist umso größer, je feiner der rote Phosphor gemahlen ist. Feinpulverisierter roter Phosphor wird aber beispielsweise bei der flammwidrigen Ausrüstung von Kunststoffen benötigt. Es bestand somit die Aufgabe, vorgenannte Gefahr durch Phlegmatisieren des roten Phosphors zu beseitigen.

Es ist gemäß der deutschen Patentschrift 11 85 591 bekannt, pulverförmigen roten Phosphor gegen die Einwirkung von Luft und Feuchtigkeit dadurch zu schützen, daß man ihn mit in feinverteilter Form vorliegendem Paraffin und/oder Wachs innig vermischt, anschließend die Mischung nur wenig über den Schmelzpunkt des Paraffins und/oder Wachses erhitzt und dann wieder abkühlt.

Schließlich wird in der deutschen Auslegeschrift 22 49 638 die Phlegmatisierung des roten Phosphors mit Hilfe von bei Raumtemperatur und Atmosphärendruck flüssigen, reaktionsträgen und einen geringen Dampfdruck aufweisenden organischen oder silicoorganischen Verbindungen beschrieben. Der bevorzugte Konzentrationsbereich liegt bei 4—10 Masse-% an Phlegmatisierungsmittel. Dieser hohe Anteil an Phlegmatisierungsmittel schränkt die Verwendbarkeit des roten Phosphors deutlich ein. Darüber hinaus ist das vorbekannte Verfahren der Aufbringung des Phlegmatisierungsmittels durch inniges Vermischen der Komponenten mit erheblichen technischen Nachteilen behaftet. Nach der bevorzugten Ausführungsform kann der rote Phosphor auch mit einer Lösung des Phlegmatisierungsmittels in einem inerten Lösungsmittel, dessen Siedepunkt höchstens etwa 60°C beträgt, gemischt werden; anschließend wird das Lösungsmittel verdampft. Verfahrensmängel sind hierbei darin zu erblicken, daß einmal die Handhabung des pulverförmigen roten Phosphors die Gefahr von Staubexplosionen in sich birgt und zum anderen die Verwendung einer Lösung des Phlegmatisierungsmittels die völlige Entfernung des Lösungsmittels notwendig macht.

Die aufgezeigten Nachteile werden bei dem erfindungsgemäßen Mittel und der erfindungsgemäßen Verfahrensweise in überraschender Weise überwunden. Gegenstand der Erfindung ist nunmehr phlegmatisierter pulverförmiger, roter Phosphor, welcher durch Behandlung von rotem Phosphor mit einem Phlegmatisierungsmittel aus einer bei Raumtemperatur und Normaldruck flüssigen, gegen roten Phosphor reaktionsträgen und einen geringen Dampfdruck aufweisenden organischen Verbindung hergestellt wird, derart, daß er aus über 98 bis 99,95 Masse-% rotem Phosphor einer Teilchengröße bis zu etwa 2 mm und 0,05 bis unter 2 Masse-% einer wasseremulgierbaren organischen Verbindung besteht.

Der Anteil der organischen Verbindung als Phlegmatisierungsmittel kann insbesondere 0,05 bis 1,8 Masse-%, vorzugsweise 0,3 bis 1,5 Masse-%, betragen. Der rote phosphor wird vorzugsweise mit einer Teilchengröße von 0,0001 mm bis 0,5 mm eingesetzt. Schließlich besteht die organische Verbindung als Phlegmatisierungsmittel beispielsweise aus Di-2-ethylphthalat.

Die vorliegende Erfindung besteht aber auch aus einem vorteilhaften Verfahren zur Herstellung von phlegmatisiertem, pulverförmigem rotem Phosphor, wobei man erfindungsgemäß in eine wässerige Suspension des roten Phosphors mit einer Teilchengröße bis zu etwa 2 mm eine wässerige Emulsion der als Phlegmatisierungsmittel dienenden organischen Verbindung einträgt, derart, daß auf über 98 bis 99,95 Masse-Teile roter Phosphor unter 2 bis 0,05 Masse-Teile der organischen Verbindung fallen, worauf man das Gemisch nach Einstellen eines pH-Wertes von 5 bis 9 während 0,5 bis 3 Stunden bei einer Temperatur von 20 bis 90°C rührt und schließlich den phlegmatisierten roten Phosphor nach der Filtration bei erhöhter Temperatur trocknet.

Das Verfahren ist wahlweise durch die folgenden Maßnahmen gekennzeichnet:

a) Die wässerige Suspension enthält bis zu 75 Masse-% roten Phosphor;

b) die wässerige Emulsion enthält bis zu 25 Masse-% der als Phlegmatisierungsmittel dienenden organischen Verbindung;

c) der rote Phosphor besitzt eine Teilchengröße von 0,0001 mm bis 0,5 mm;

d) in dem wässerigen Suspensions-/Emulsions-Gemisch Phosphorfallen auf 98,2—99,95 Masseteile roter 1,8—0,05 Masseteile der organischen Verbindung

e) nach Einstellen eines pH-Wertes von 6 — 8 und Zugabe des Phlegmatisierungsmittels wird während 1 Stunde bei einer Temperatur von 60°C gerührt;

f) die organische Verbindung des Phlegmatisierungsmittels besteht aus Di-2-ethyl-hexylphthalat und

g) nach der abschließenden Filtration wird noch bei Temperaturen von 80 bis 120°C getrocknet.

Die erfindungsgemäße Phlegmatisierung in wäßriger Phase führt in überraschender Weise dazu, daß die angestrebten Effekte bei sehr geringen Gehalten an Phlegmatisierungsmittel erreicht werden.

Das nach der beschriebenen Verfahrensweise anfallende Produkt ist gut rieselfähig und nicht staubend. Da die Staubbildung des so modifizierten roten Phosphors erheblich verringert ist, kann letzterer ohne Schwierigkeiten in den eingangs erwähnten Anwendungsbereichen eingesetzt werden.

Die nachfolgenden Beispiele und Tabellen dienen zur näheren Erläuterung der Erfindung.

## Beispiel 1 (erfindungsgemäß)

500 ml einer alkalischen Phosphorsuspension mit einem Gehalt von 250 g rotem Phosphor wurden durch Zugabe von 5 %iger Phosphorsäure auf einen pH-Wert von 8 eingestellt und auf 60°C erwärmt.

Bei der Bereitung der Phlegmatisierungsmittel-Emulsion wurde in folgender Weise verfahren:

In 100 g Di-2-ethylhexylphthalat (z. B. ®Genomoll 100 der Firma HOECHST Aktiengesellschaft,, Frankfurt/Main) wurden 0,75 g eines geeigneten Emulgators (z. B. ®Arkopal N 090 der Firma HOECHST Aktiengesellschaft, Frankfurt/Main) eingerührt. Dann wurden unter intensivem Rühren 300 ml Wasser zugegeben.

Von der so bereiteten DOP (Di-2-ethylhexylphthalat)Emulsion wurden 4 ml in die oben beschriebene Phosphorsuspension eingerührt. Die Suspension wurde dann noch während 1 Stunde bei 60°C gerührt und anschließend filtriert. Der Filterrückstand wurde mit Wasser gewaschen und anschließend bei 100°C im Stickstoffstrom getrocknet.

Der analytisch ermittelte DOP-Gehalt lag bei 0,38 Masse-%.

Die Werte für die anwendungsbezogenen Ausprüfungen des auf diese Weise phlegmatisierten roten Phosphors sind in den Tabellen 1 und 2 dargestellt.

## Beispiel 2 (erfindungsgemäß)

Es wurde analog Beispiel 1 verfahren, wobei jedoch 8 ml DOP-Emulsion eingesetzt wurden.

Der analytisch ermittelte DOP-Gehalt lag bei 0,81 Masse-%.

Die Werte für die anwendungsbezogenen Ausprüfungen des auf diese Weise phlegmatisierten roten Phosphors sind in den Tabellen 1 und 2 dargestellt.

## Beispiel 3 (erfindungsgemäß)

Es wurde analog Beispiel 1 verfahren, wobei jedoch 15 ml DOP-Emulsion eingesetzt wurden.

Der analytisch ermittelte DOP-Gehalt lag bei 1,45 Masse-%.

Die Werte für die anwendungsbezogenen Ausprüfungen des auf diese Weise phlegmatisierten roten Phosphors sind in den Tabellen 1 und 2 dargestellt.

## Beispiel 4 (Stand der Technik)

Es wurde analog DE—OS 22 49 638, Beispiel 1C, unter Verwendung von 450 g rotem Phosphor und 50 g ®Genomoll 100 gearbeitet.

Der analytisch ermittelte DOP-Gehalt lag bei 9,86 Masse-%.

Die Werte für die anwendungsbezogenen Ausprüfungen des auf diese Weise phlegmatisierten roten Phosphors sind in den Tabellen 1 und 2 dargestellt.

Bestimmung des Di-2-ethylhexylphthalat-(DOP)-Gehaltes:

50 g Probematerial (hergestellt gemäß Beispielen 1—4) werden in einen 500 ml-Meßkolben eingewogen, mit Aceton bis zur Marke aufgefüllt und auf einem Magnetrührer 10—15 Minuten gerührt. Anschließend wird über ein Faltenfilter (32 cm φ) filtriert; das Filtrat wird in einem trockenen Glasgefäß aufgefangen. Das meist trübe Filtrat wird dann mit 10—20 Tropfen einer Lösung von 10 g konzentrierter Salzsäure in 100 ml Aceton versetzt und nach gründlichem Mischen über doppelte Faltenfilter (32 cm φ) in einen trockenen 250 ml-Meßkolben filtriert. Das klare, leicht gelblich gefärbte Filtrat wird in einen gewogenen 500 ml-Destillationskolben mit 2—3 Siedesteinen gegeben. Nach dem Abdestillieren der Hauptmenge des Acetons wird der Destillationskolben in einem elektrisch beheizten Trockenschrank bei 120°C bis zur Gewichtskonstanz erhitzt. Nach dem Erkalten des Kolbens wird die DOP-Menge gravimetrisch ermittelt.

Bestimmung der Rieselfähigkeit

Die Bestimmung der Rieselfähigkeit erfolgte mit dem in der DIN 53 916 angegebenen Testgerät nach PFRENGLE. (DIN 53 916 (Ausgabe August 1974): Bestimmung der Rieselfähigkeit von Pulvern und Granulaten.)

Bestimmung der Staubbildung

Ein Relativvergleich der Staubbildung wurde mit Hilfe des Konimeters, Typ H-S, der Fa. Sartorius, Göttingen durchgeführt. Dieses Gerät ist von K. Guthmann, Stahl und Eisen 79, 1129 ff. (1959) beschrieben worden.

Zur Vorbereitung der Messung wurde 1 g Probematerial in eine trockene 250 ml Glasflasche mit Schraubdeckel eingewogen und 2 Minuten intensiv geschüttelt. Nach Entfernung des Schraubdeckels erfolgte die Messung des Phosphorstaubes in den in der Tabelle 2 angegebenen Zeitintervallen.

Tabelle 1: Abhängigkeit der Rieselfähigkeit vom Gehalt an Phlegmatisierungsmittel und von der Kornverteilung.

| PHOSPHORROT-Produkt | Gehalt an Phlegma-tisierungsmittel (%) | Körnungsanalyse (%) [a] | | | Rieselfähigkeit (DIN 53916) Höhe des Schüttkegels (mm) | Cotangens des Schüttwinkel $\varphi$ |
|---|---|---|---|---|---|---|
| | | 400-100 µm | 100-45 µm | <45 µm | | |
| Beispiel 1 (erfindungs-gemäß) | 0,38 | 20 | 21 | 59 | 5,8 [b] | 0,86 |
| Beispiel 2 (erfindungs-gemäß) | 0,81 | 20 | 23 | 57 | 5,9 [b] | 0,85 |
| Beispiel 3 (erfindungs-gemäß) | 1,45 | 19 | 23 | 58 | 6,6 [b] | 0,76 |
| Beispiel 4 (Stand der Technik) | 9,86 | 0 | 2 | 98 | 7,0 [b] | 0,71 |
| Handelspro-dukt A [c] | - | 13 | 14 | 73 | 5,7 [b] | 0,88 |
| Handelspro-dukt B [d] | - | 0 | 2 | 98 | 5,8 [b] | 0,86 |

a) Die Werte der Körnungsanalyse wurden durch Naßsiebung mit Methanol/Wasser erhalten

b) Mittelwerte aus 5 Einzelmessungen

c) PHOSPHOR ROT, Typ NN  der HOECHST Aktiengesellschaft, Frankfurt/Main

d) PHOSPHOR ROT, Typ SF  der HOECHST Aktiengesellschaft, Frankfurt/Main

EP 0 176 836 B1

Tabelle 2: Abhängigkeit der Staubbildung vom Gehalt an Phlegmatisierungsmittel und von
der Kornverteilung

| PHOSPHOR ROT-Produkt | Gehalt an Phlegma-tisierungsmittel (%) | Körnungsanalyse (%) [a] | | | Staubteilchen/cm Luft [b] nach einer Absitzzeit von ... Minuten [c] | | | | | | | | |
|---|---|---|---|---|---|---|---|---|---|---|---|---|---|
| | | 400-100 µm | 100-45 µm | <45 µm | 0 | 0,5 | 1,0 | 1,5 | 2,0 | 2,5 | 3,0 | 4,0 | 5,0 |
| Beispiel 1 (erfindungs-gemäß) | 0,38 | 20 | 21 | 59 | >500 | >500 | >500 | 180 | 40 | – | – | – | – |
| Beispiel 2 (erfindungs-gemäß) | 0,81 | 20 | 23 | 57 | 80 | 5 | – | – | – | – | – | – | – |
| Beispiel 3 (erfindungs-gemäß) | 1,45 | 19 | 23 | 58 | 2 | – | – | – | – | – | – | – | – |
| Beispiel 4 (Stand der Technik) | 9,86 | 0 | 2 | 98 | 5 | – | – | – | – | – | – | – | – |
| Handelspro-dukt A [d] | – | 13 | 14 | 73 | >500 | >500 | >500 | >500 | >500 | >500 | >500 | >500 | 270 |
| Handelspro-dukt B [e] | – | 0 | 2 | 98 | >500 | >500 | >500 | >500 | >500 | >500 | >500 | >500 | >500 |

a) Die Werte der Körnungsanalyse wurden durch Naßsiebung mit Mehanol/Wasser erhalten.

b) Die Messung erfolgte mit einem Konimeter, Typ H-S der Fa. Sartorius, Göttingen

c) Die angegebenen Werte sind die Mittelwerte aus 5 Einzelmessungen

d) PHOSPHOR ROT, Typ NN der HOECHST Aktiengesellschaft, Frankfurt/Main

e) PHOSPHOR ROT, Typ SF der HOECHST Aktiengesellschaft, Frankfurt/Main

EP 0 176 836 B1

# EP 0 176 836 B1

Die in der Tabelle 1 angegebenen Werte für die Rieselfähigkeit zeigen deutlich, daß das Rieselverhalten des *nicht* phlegmatisierten roten Phosphors (Handelsprodukt A und B) beim erfindungsgemäßen Verfahren zur Phlegmatisierung praktisch unverändert erhalten bleibt.

Gleichzeitig wird, wie die Tabelle 2 zeigt, die Staubbildung durch das erfindungsgemäße Verfahren auf ein Niveau gesenkt, das beim Stand der Technik nur mit einem wesentlich höheren Gehalt an Phlegmatisierungsmittel erreicht werden kann.

## Patentansprüche

1. Phlegmatisierter, pulverförmiger roter Phosphor, welcher durch Behandlung von rotem Phosphor mit einem Phlegmatisierungsmittel aus einer bei Raumtemperatur und Normaldruck flüssigen, gegen roten Phosphor reaktionsträgen und einen geringen Dampfdruck aufweisenden organischen Verbindung hergestellt wird, dadurch gekennzeichnet, daß er aus über 98 bis 99,95 Masse-% rotem Phosphor einer Teilchengröße bis zu etwa 2 mm und 0,05 bis unter 2 Masse-% einer wasseremulgierbaren organischen Verbindung besteht.

2. Phlegmatisierter roter Phosphor nach Anspruch 1, dadurch gekennzeichnet, daß der Anteil der organischen Verbindung als Phlegmatisierungsmittel 0,05 bis 1,8 Masse-%, vorzugsweise 0,3 bis 1,5 Masse-%, beträgt.

3. Phlegmatisierter roter Phosphor nach Anspruch 1 oder 2, dadurch gekennzeichnet. daß er eine Teilchengröße von 0,0001 mm bis 0,5 mm besitzt.

4. Phlegmatisierter roter Phosphor nach einem der Ansprüche 1—3, dadurch gekennzeichnet. daß die organische Verbindung als Phlegmatisierungsmittel aus Di-2-ethylhexylphthalat besteht.

5. Verfahren zur Herstellung von phlegmatisiertem, pulverförmigem rotem Phosphor nach einem der Ansprüche 1—4, dadurch gekennzeichnet, daß man in eine wässerige Suspension des roten Phosphors mit einer Teilchengröße bis zu etwa 2 mm eine wässerige Emulsion der als Phlegmatisierungsmittel dienenden organischen Verbindung einträgt, derart, daß auf über 98 bis 99,95 Masse-Teile roter Phosphor unter 2 bis 0,05 Masse-Teile der organischen Verbindung fallen, worauf man das Gemisch nach Einstellen eines pH-Wertes von 5 bis 9 während 0,5 bis 3 Stunden bei einer Temperatur von 20 bis 90°C rührt und schließlich den phlegmatisierten roten Phosphor nach der Filtration bei erhöhter Temperatur trocknet.

6. Verfahren nach Anspruch 5, dadurch gekennzeichnet, daß die wässerige Suspension bis zu 75 Masse-% roten Phosphor enthält.

7. Verfahren nach einem der Ansprüche 5—6, dadurch gekennzeichnet, daß die wässerige Emulsion bis zu 25 Masse-% der als Phlegmatisierungsmittel dienenden organischen Verbindung enthält.

8. Verfahren nach einem der Ansprüche 5—7, dadurch gekennzeichnet, daß der eingesetzte rote Phosphor eine Teilchengröße von 0,0001 mm—0,5 mm besitzt.

9. Verfahren nach einem der Ansprüche 5—8, dadurch gekennzeichnet, daß in dem wässerigen Suspensions-/Emulsions-Gemisch auf 98,2—99,95 Masseteile roter Phosphor 1,8—0,05 Masseteile der organischen Verbindung fallen.

10. Verfahren nach einem der Ansprüche 5—9, dadurch gekennzeichnet, daß nach Einstellen eines pH-Wertes von 6—8 und Zugabe des Phlegmatisierungsmittels während 1 Stunde bei einer Temperatur von 60°C gerührt wird.

11. Verfahren nach einem der Ansprüche 5—10, dadurch gekennzeichnet, daß die organische Verbindung des Phlegmatisierungsmittels aus Di-2-ethyl-hexylphthalat besteht.

12. Verfahren nach einem der Ansprüche 5—11, dadurch gekennzeichnet, daß nach der Filtration bei Temperaturen von 80 bis 120°C getrocknet wird.

## Revendications

1. Phosphore rouge phlegmatisé, à l'état de poudre, préparé par traitement du phosphore rouge à l'aide d'un agent phlegmatisant consistant en un composé organique liquide à température ambiante et pression normale, inerte à l'égard du phosphore rouge et ayant une faible pression de vapeur, caractérisé en ce qu'il consiste en plus de 98 et jusqu'à 99,95% en poids de phosphore rouge à une dimension de particule allant jusqu'à 2 mm environ, et 0,05 à moins de 2% en poids d'un composé organique émulsionnable dans l'eau.

2. Phosphore rouge phlegmatisé selon la revendication 1, caractérisé en ce que la proportion du composé organique servant d'agent phlegmatisant représente de 0,05 à 1,8% en poids, de préférence de 0,3 à 1,5% en poids.

3. Phosphore rouge phlegmatisé selon la revendication 1 ou 2, caractérisé en ce qu'il est à une dimension de particule de 0,0001 mm à 0,5 mm.

4. Phosphore rouge phlegmatisé selon l'une des revendications 1 à 3, caractérisé en ce que le composé organique servant d'agent phlegmatisant consiste en le phtalate de di-2-éthylhexyle.

5. Procédé de préparation du phosphore rouge phlegmatisé en poudre selon l'une des revendications 1 à 4, caractérisé en ce que, dans une suspension aqueuse du phosphore rouge à une dimension de particule allant jusqu'à 2 mm environ, on introduit une émulsion aqueuse du composé organique servant d'agent phlegmatisant en quantité correspondant, pour plus de 98 et jusqu'à 99,95 parties en poids de phosphope

6

rouge, à moins de 2 et jusqu'à 0,05 partie en poids du composé organique, puis, après réglage à un pH de 5 à 9, on agite le mélange pendant 0,5 à 3 h à une température de 20 à 90°C et, finalement, après filtration, on sèche le phosphore rouge phlegmatisé à température élevée.

6. Procédé selon la revendication 5, caractérisé en ce que la suspension aqueuse contient jusqu'à 75% en poids de phosphore rouge.

7. Procédé selon l'une des revendications 5 ou 6, caractérisé en ce que l'émulsion aqueuse contient jusqu'à 25% en poids du composé organique servant d'agent phlegmatisant.

8. Procédé selon l'une des revendications 5 à 7, caractérisé en ce que le phosphore rouge mis en oeuvre est à une dimension de particule de 0,0001 mm à 0,5 mm.

9. Procédé selon l'une des revendications 5 à 8, caractérisé en ce que, dans le mélange en suspension/ émulsion aqueuse, pour 98,2 à 99,95 parties en poids de phosphore rouge, il y a 1,8 à 0,05 parties en poids du composé organique.

10. Procédé selon l'une des revendications 5 à 9, caractérisé en ce que, après réglage à un pH de 6 à 8 et addition de l'agent phlegmatisant, on agite pendant 1 h à la température de 60°C.

11. Procédé selon l'une des revendications 5 à 10, caractérisé en ce que le composé organique de l'agent phlegmatisant consiste en le phtalate de di-2-éthylhexyle.

12. Procédé selon l'une des revendications 5 à 11, caractérisé en ce que, après filtration, on sèche à des températures de 80 à 120°C.

## Claims

1. Phlegmatized, pulverulent red phosphorus prepared by treating red phosphorus with a phlegmatizing agent made from an organic compound which is liquid at room temperature and atmospheric pressure, is inert toward red phosphorus and has a low vapor pressure, which comprises more than 98 to 99.95% by weight of red phosphorus having a particle size of up to about 2 mm and 0.05 to less than 2% by weight of a water-emulsifiable organic compound.

2. Phlegmatized red phosphorus as claimed in claim 1, wherein the proportion of the organic compound as phlegmatizing agent is from 0.05 to 1.8% by weight, preferably from 0.3 to 1.5% by weight.

3. Phlegmatized red phosphorus as claimed in claim 1 or 2, having a particle size of from 0.0001 mm to 0.5 mm.

4. Phlegmatized red phosphorus as claimed in anyone of claims 1—3, wherein the organic compound as phlegmatizing agent comprises di-2-ethylhexyl phthalate.

5. A process for the preparation of phlegmatized, pulverulent red phosphorus as claimed in any one of claims 1—4, which comprises introducing an aqueous emulsion of the organic compound serving as phlegmatizing agent into an aqueous suspension of the red phosphorus having a particle size of up to about 2 mm in such a manner that from less than 2 to 0.05 parts by weight of the organic compound are present per from more than 98 to 99.95 parts by weight of red phosphorus, then stirring the mixture for from 0.5 to 3 hours at a temperature of from 20 to 90°C after a pH of from 5 to 9 has been established, and finally drying the phlegmatized red phosphorus at elevated temperature after filtration.

6. The process as claimed in claim 5, wherein the aqueous suspension contains up to 75% by weight of red phosphorus.

7. The process as claimed in any one of claims 5—6, wherein the aqueous emulsion contains up to 25% by weight of the organic compound serving as phlegmatizing agent.

8. The process as claimed in any one of claims 5—7, wherein the red phosphorus employed has a particle size of from 0.0001 mm—0.5 mm.

9. The process as claimed in any one of claims 5—8, wherein from 1.8—0.05 parts by weight of the organic compound are present in the aqueous suspension/emulsion mixture per 98.2—99.95 parts by weight of red phosphorus.

10. The process as claimed in any one of claims 5—9, wherein the mixture is stirred at a temperature of 60°C for 1 hour after a pH of 6—8 has been established and after the phlegmatizing agent has been added.

11. The process as claimed in any one of claims 5—10, wherein the organic compound of the phlegmatizing agent comprises di-2-ethylhexyl phthalate.

12. The process as claimed in any one of claims 5—11, wherein the drying after the filtration is carried out at temperatures of from 80 to 120°C.